# EUROPÄISCHE PATENTSCHRIFT

(11) **EP 3 570 951 B1**
(45) Veröffentlichungstag und Bekanntmachung des Hinweises auf die Patenterteilung: **03.03.2021**
(21) Anmeldenummer: 18701031.9
(22) Anmeldetag: 19.01.2018
(51) Int. Cl.: B01D 17/04, B01D 17/00, B01D 17/12

(54) **ÖL/WASSER-TRENNVORRICHTUNG MIT DRUCKLUFTBEAUFSCHLAGUNG**
OIL/WATER SEPARATOR WITH COMPRESSED AIR CHARGING
DISPOSITIF DE SÉPARATION DE L'EAU ET DE L'HUILE PAR APPLICATION D'AIR COMPRIMÉ

(30) Priorität: 20.01.2017 DE 102017101095; 30.03.2017 DE 102017106848
(43) Veröffentlichungstag der Anmeldung: 27.11.2019
(73) Patentinhaber: Beko Technologies GmbH, 41468 Neuss (DE)
(72) Erfinder: SINSTEDTEN, Johannes, 41352 Korschenbroich (DE)
(74) Vertreter: Patentanwälte Bauer Vorberg Kayser
(86) Internationale Anmeldenummer: PCT/EP2018/051277
(87) Internationale Veröffentlichungsnummer: WO 2018/134339

(56) Entgegenhaltungen:
- EP-A1- 0 846 485
- WO-A1-99/58219
- WO-A1-2017/017008
- DE-A1-102006 009 542

## Beschreibung

Die Erfindung betrifft eine Öl/Wasser-Trennvorrichtung zum Entfernen ölhaltiger Bestandteile aus einem Öl/Wasser-Gemisch, umfassend einen Hauptfilter, welcher zur Abtrennung von ölhaltigen Bestandteilen aus dem Öl/Wasser-Gemisch ausgebildet ist.

Derartige Öl/Wasser-Trennvorrichtungen werden oftmals in Verbindung mit Druckluftkompressoren eingesetzt. Druckluftkompressoren erzeugen Druckluft durch Ansaugen und Komprimieren von Umgebungsluft. Die in der Umgebungsluft enthaltene Luftfeuchtigkeit fällt dabei physikalisch bedingt und durch Trocknung der Druckluft als Kondensat an. Dieses Kondensat stellt als Öl/Wasser-Gemisch ein Abwasser dar, das meist wegen dem Eintrag von Schmiermitteln des Druckluftkompressors nicht in den öffentlichen Abwasserkanal eingeleitet werden darf, weil es die Grenzwerte an Kohlenwasserstoffkonzentration übersteigt.

Bei einem Volumenstrom von 60m³/h angesaugter Luft kann typischerweise ein meist diskontinuierlicher Kondensatstrom von 1,231/h entstehen, der mit 240mg/h Öl beladen ist. Dies entspricht 195 mg Öl pro Liter an Kondensat. In Abhängigkeit von verschiedenen Parametern können diese Werte schwanken, wobei zu diesen Parametern beispielsweise die klimatischen Bedingungen (Umgebungstemperatur und -feuchte), die im Kompressor verwendeten Ölsorte und die Bau- und Betriebsweise des Kompressors zählen können. Auch die Bindung zwischen Wasser und Schmiermittel ist unterschiedlich und reicht von einem Gemisch von Öl und Wasser über eine Dispersion bis hin zu einer Emulsion. Zulässige Werte für die Einleitung in den Schmutzwasserkanal liegen jedoch in der Größenordnung von 10-20 mg/l, teilweise sogar bei 5 mg/l (Öl/Kondensat). Es entsteht somit ein durch Abfallentsorgungsunternehmen zu entsorgender Sondermüll, obwohl es sich zu über 99,5% um Wasser aus der Feuchte der Umgebungsluft handelt.

Zur Aufbereitung eines solchen Kondensats ist es daher bekannt, ÖI/Wasser-Trenner einzusetzen. Aufgabe handelsüblicher Öl/Wasser-Trenner ist es dabei, das Kondensat vor Ort einleitfähig aufzubereiten, die Ölanteile also kostengünstig aus dem Wasser zu entfernen. Bekannte Apparate dieser Bauart arbeiten mit mehreren Abscheidestufen, um die gewünschte Reinheit des Wassers zu erzielen. Dabei wird das Kondensat typischerweise über ein Druckentlastungselement langsam und damit turbulenzarm in einen Vorabscheider eingeleitet. Dieser arbeitet nach dem Prinzip der Schwerkrafttrennung und sorgt für das Absetzen schwerer, sedimentartiger Verunreinigungen (Dichte größer 1kg/dm³) und das Aufschwimmen freier Ölanteile (Dichte kleiner 1kg/dm³). Diese Ölanteile fließen dann einem Auffangbehälter zu. In einer zweiten Stufe werden aus dem Kondensat durch einen Adsorptionsfilter feine Öltröpfchen abgetrennt, wobei die Adsorptionsfilter oftmals auf einem oleophilen Material, sowie Aktivkohle mit einer sehr großen inneren Oberfläche basieren.

In einer anderen Ausführung eines Öl/Wasser-Trenners wird das Kondensat mitsamt den freien Ölanteilen durch einen Adsorptionsfilter geführt, der seinerseits auf der Kondensatfläche aufschwimmt und der sich hier absetzende Ölanteile (Dichte größer 1kg/dm³) aufsaugt. Ein solcher Öl/Wasser-Trenner ist beispielsweise aus der DE 10 2006 009 542 A1 bekannt. Der Aufbau dieses Öl/Wasser-Trenners funktioniert nach dem Prinzip der korrespondierenden Wassersäulen, wobei in dem Maß, in dem neues Kondensat zufließt, aufbereitetes Kondensat den Apparat am Reinwasseraustritt zum Abwasserkanal hin verlässt.

Bei derartigen Öl/Wasser-Trennern werden die aufgefangenen freien Öle sowie die mit Öl gesättigten Filter in der Regel einer thermischen Verwertung zugeführt, sie können aber auch aufbereitet werden. Stark dispergierte oder sogar emulgierte Kondensate sind in diesen Apparaten nicht zu behandeln und werden üblicherweise durch aufwändigere Verfahren aufbereitet, z.B. durch Membran-, Verdampfungs- oder Spaltverfahren.

Beim Betrieb solcher Öl/Wasser-Trenner besteht oftmals das Problem, dass der Durchflusswiderstand der Filter durch Sättigung der oberen Schichten oder durch Bildung von biologischen Schleimschichten ansteigt. Um ein Überlaufen oder einen Rückstau zu vermeiden, müssen die Filter daher frühzeitig gewechselt werden, obwohl ihre Aufnahmekapazität noch nicht erschöpft ist. Zur Lösung dieses Problems schlägt die WO 2011/104 368 A1 vor, eine mechanische Trennvorrichtung zur Abtrennung von schleimartigen Substanzen und eine elektrische Pumpe vorzusehen, welche das Kondensat durch den Filter saugt und so den Durchflusswiderstand überwindet. Der Betrieb erfolgt bei Anwesenheit von Kondensat und wird über eine elektronische Niveauerfassung gesteuert. Grundsätzlich erfolgt der Durchfluss durch den Filter somit nur mittels der Pumpe, was die genannten Vorteile mit sich bringt, jedoch mit erhöhten Energiekosten verbunden ist. Hinzu kommen die zusätzlichen Kosten für die Anschaffung sowie Wartung und Instandhaltung der Pumpe Dokument WO99/58219 offenbart eine Vorrichtung zur Trennung von Gas und Flüssigkeit. Diese Vorrichtung ist nach dem hydrostatischen Prinzip ausgebildet.

Aufgabe der Erfindung ist es daher, eine Öl/Wasser-Trennvorrichtung bereit zu stellen, die einfach und mit wenig Energieaufwand betrieben werden kann. Weiterhin soll Öl/Wasser-Trennvorrichtung kostengünstig herstellbar und die Kosten für Wartung und Instandhaltung gering sein.

Erfindungsgemäß wird diese Aufgabe durch eine ÖI/Wasser-Trennvorrichtung gemäß dem unabhängigen Anspruch 1 gelöst. Vorteilhafte Weiterbildungen der Vorrichtung ergeben sich aus den Unteransprüchen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die erfindungsgemäße Öl/Wasser-Trennvorrichtung eignet sich zum Entfernen ölhaltiger Bestandteile aus einem Öl/Wasser-Gemisch, wobei es sich bei dem Öl/Wasser-Gemisch insbesondere um das Kondensat eines Druckluftkompressors handeln kann. Die Vorrichtung ist jedoch auch zur Aufbereitung ähnlicher Öl/Wasser-Gemische geeignet, wobei die Begriffe "Öl/Wasser-Gemisch" und "Kondensat" lediglich zur Beschreibung der Erfindung gleichbedeutend verwendet werden.

Die Vorrichtung umfasst einen Hauptfilter, welcher zur Abtrennung von ölhaltigen Bestandteilen aus dem Öl/Wasser-Gemisch ausgebildet ist, wobei dem Hauptfilter zu reinigendes Öl/Wasser-Gemisch zugeführt und nach Durchlauf durch den Hauptfilter aus der Öl/Wasser-Trennvorrichtung abgeführt wird. Die Öl/Wasser-Trennvorrichtung ist dabei für eine Zu- und Abführung dieser Flüssigkeiten nach dem hydrostatischen Prinzip ausgebildet. In dem Maß, in dem neues Kondensat in die Vorrichtung zufließt, verlässt somit aufbereitetes Kondensat den Apparat nach dem Prinzip der korrespondierenden Wassersäulen. Dieses Prinzip kann auf verschiedene bekannte Arten insbesondere mit entsprechend ausgeführten Behältern und Steigleitungen verwirklicht werden.

Die Erfindung stellt somit eine Vorrichtung bereit, die im Normalbetrieb ausschließlich auf bekannte Weise nach dem hydrostatischen Prinzip betrieben werden kann, jedoch aufgrund des erhöhten hydrostatischen Drucks eignet sie sich insbesondere für Bedingungen, bei denen der Durchflusswiderstand erhöht ist. Ein Überlaufen der Trennvorrichtung wird somit wirksam und einfach verhindert, der Durchgang von Öl/Wasser-Gemisch durch den Filter kann so aufrecht erhalten werden, auch wenn sich der Durchflusswiderstand erhöht hat. Daraus ergeben sich höhere Standzeiten für die Trennvorrichtung. Dies ist insbesondere dann von Vorteil, wenn regelmäßige Wartungsintervalle geplant sind, ein Wechsel der Filterelemente zwischen den geplanten Wartungsterminen jedoch vermieden werden soll. Mit der Erfindung kann der Betrieb der Vorrichtung bis zum nächsten Wartungsintervall aufrecht gehalten werden.

Die Vorrichtung kann somit grundsätzlich ohne zusätzliche Energiezufuhr betrieben werden und kontinuierlich ölhaltige Bestandteile aus einem Öl/Wasser-Gemisch trennen. Ein wesentlicher Vorteil besteht darin, dass keine aufwändige Ventiltechnik notwendig ist. Da die hydrostatische Druckbeaufschlagung permanent erfolgt, ist der Durchfluss während der gesamten Betriebszeit gewährleistet.

Es hat sich als besonders vorteilhaft erwiesen, wenn die hydrostatische Druckbeaufschlagung im Niederdruckbereich erfolgt, der auf den Hauptfilter wirkende hydrostatische Druck also weniger als 1 bar, vorzugsweise weniger als 0,5 bar beträgt. Insbesondere hat sich ein hydrostatischer Druck von 0,05 bis 0,5 bar, vorzugsweise von 0,05 bis 0,3 bar, besonders bevorzugt von 0,1 bis 0,3 bar als sinnvoll und ausreichend erwiesen. Aufgrund des unterschiedlichen mengenmäßigen Anfalls von Kondensat schwankt der hydrostatische Druck während des Betriebs ohnehin, da der Füllgrad und damit die befüllte Höhe innerhalb der Vorrichtung über die Zeit zu oder abnimmt.

Ein Überdruck von bis zu 0,5bar hat sich als ausreichend erwiesen, um typischerweise auftretende Durchflusswiderstände zu überwinden und Kondensat durch den Filter zu drücken. Ein Überdruck in dieser Größenordnung hat dabei weiterhin den Vorteil, dass die Öl/Wasser-Trennvorrichtung damit nicht als Druckbehälter im Sinne der Druckgeräterichtlinie (DGRL) der Europäischen Union gilt. Die Öl/Wasser-Trennvorrichtung müsste ansonsten die besonderen Anforderungen dieser Richtlinie erfüllen.

Der auf den Hauptfilter wirkende hydrostatische Druck des Kondensat wird im wesentlichen durch die geometrischen Abmessungen der Vorrichtung beeinflusst. Der Hauptfilter befindet sich in einem Hauptfiltergehäuse, das unterhalb eines Kopfgehäuses angeordnet ist. Das Kopfgehäuse und das Hauptfiltergehäuse sind über eine Kondensatleitung miteinander verbunden. Der Abstand zwischen Kopfgehäuse und Hauptfiltergehäuse und damit die Länge der Kondensatleitung ist entscheidend für den hydrostatischen Druck, der auf den Hauptfilter wirkt. 1 m Höhe bzw. 1 m Länge der Kondensatleitung bewirkt etwa 0,1 bar hydrostatischen Druck auf den Hauptfilter. Letztendlich kann der gewünschte in der Vorrichtung wirkende hydrostatische Überdruck durch Auswahl und Einstellung des Abstands eingestellt werden.

In einer besonders vorteilhaften Ausführungsvariante ist die Kondensatleitung längenveränderlich ausgeführt, sodass eine Anpassung der Länge und damit des hydrostatischen Drucks vor Ort schnell und einfach vorgenommen werden kann. Beispielsweise kann die Kondensatleitung als Teleskopleitung mit ineinander verschiebbaren Leitungsabschnitten ausgeführt sein. Alternativ ist auch eine Ausführung mit längenveränderlichem Spiralschlauch denkbar.

Im Normalbetrieb nutzt die Trennvorrichtung also ausschließlich den hydrostatischen Druck. Erfindungsgemäß kann die Öl/Wasser-Trennvorrichtung jedoch zusätzlich eine Steuereinheit aufweisen, die dazu ausgebildet ist, temporär eine Beaufschlagung der Öl/Wasser-Trennvorrichtung mit Steuerluft durchzuführen, durch welche Öl/Wasser-Gemisch mittels noch höherem Überdruck durch den Hauptfilter drückbar ist. Bei Bedarf kann somit eine solche Druckbeaufschlagung erfolgen, um Kondensat durch den Filter zu drücken. Bedarf hierzu besteht insbesondere, wenn sich der Durchflusswiderstand des Filters noch weiter erhöht hat.

Um einen erhöhten Durchflusswiderstand des Filters festzustellen, können Sensormittel zur Detektion des Füllstands an Öl/Wasser-Gemisch in der Öl/Wasser-Trennvorrichtung vorgesehen sein, welche in Verbindung mit der Steuereinheit stehen. Steigt der Durchflusswiderstand des Filters an, steigt auch der Füllstand an Kondensat in der Vorrichtung an. In einer Ausführungsform der Erfindung ist die Steuereinheit dann dazu ausgebildet, temporär die Beaufschlagung der Öl/Wasser-Trennvorrichtung mit Steuerluft durchzuführen, wenn von den Sensormitteln ein vorgegebener Füllstand A an Öl/Wasser-Gemisch detektiert wurde. Dieser Füllstand A stellt einen maximalen Füllstand an Kondensat dar, der möglichst nicht überschritten werden sollte.

Die Steuereinheit kann dabei verschiedene Auswerte- und Steuerfunktionen übernehmen, wobei sie auch zur Interaktion mit einem Benutzer ausgebildet sein kann. Beispielsweise kann sie dazu Anzeigen und Eingabemittel zur Eingabe von Befehlen aufweisen. Insbesondere kann die Steuereinheit auch dazu ausgebildet sein, die Beaufschlagung der Öl/Wasser-Trennvorrichtung mit Steuerluft aufgrund eines Steuerbefehls an die Steuereinheit durchzuführen. Dies kann insbesondere bei der Wartung der Vorrichtung genutzt werden, um einen Filter bei Bedarf leer zu drücken. Diese Funktion ist beispielsweise beim Einsatz von austauschbaren Filterkartuschen von Vorteil, da so Kondensat weitestgehend aus einer Öl/Wasser-Trennvorrichtung entfernt werden kann, bevor eine Filterkartusche abgeschraubt wird. Ansonsten würde beim Austausch der Filterkartusche sehr viel Flüssigkeit aus der Vorrichtung herauslaufen bzw. dies müsste mit entsprechenden Maßnahmen verhindert werden.

Die Steuereinheit kann ferner dazu ausgebildet sein, die Beaufschlagung der Öl/Wasser-Trennvorrichtung mit Steuerluft wieder zu beenden, wenn von den Sensormitteln ein vorgegebener Füllstand B an Öl/Wasser-Gemisch detektiert wurde. Dieser Füllstand B liegt unter dem maximalen Füllstand A und stellt ein Niveau dar, bei dessen Erreichen die Druckbeaufschlagung beendet werden soll. Nach Abschaltung der Steuerluft kann wieder Kondensat nachfließen und den Füllstand erneut so lange erhöhen, bis wieder eine Druckbeaufschlagung durchgeführt wird, so dass sich die zwei Betriebsarten auch abwechseln können. Der Arbeitsbereich der Vorrichtung liegt dann zwischen den Niveaus A und B.

Optional kann ein weiterer Füllstand C definiert werden, der unterhalb des Füllstands B liegt. Dieses Niveau C stellt einen unteren Alarmpunkt dar, da der Füllstand nicht unter dieses Niveau fallen soll. Fällt der Kondensatpegel unter dieses Niveau C, können verschiedene Maßnahmen vorgesehen sein. Beispielsweise kann eine Alarmmeldung ausgegeben und/oder die Vorrichtung automatisch abgeschaltet werden.

Vorzugsweise wird die Zufuhr von Öl/Wasser-Gemisch in die Öl/Wasser-Trennvorrichtung während der Beaufschlagung mit Steuerluft unterbunden. Auf diese Weise kann eine entsprechende Zuführung dicht verschlossen werden, durch welche ansonsten Steuerluft entweichen könnte. Je nach Aufbau der Öl/Wasser-Trennvorrichtung kann dies für die Erzeugung von Überdruck durch die Steuerluft erforderlich oder zumindest vorteilhaft sein.

In einer Ausführungsform der Erfindung weist die Öl/Wasser-Trennvorrichtung das Kopfgehäuse, Mittel zur Zuführung des Öl/Wasser-Gemischs in eine Kammer innerhalb des Kopfgehäuses und eine Verbindungsöffnung zur Überführung des Öl/Wasser-Gemischs aus dieser Kammer in den Hauptfilter auf. Die Steuereinheit ist dazu ausgebildet, temporär eine Beaufschlagung der Kammer mit Steuerluft durchzuführen, bei der Steuerluft derart in die Kammer innerhalb des Kopfgehäuses geführt wird, dass das Öl/Wasser-Gemisch mittels Überdruck von der Kammer durch die Verbindungsöffnung in den Hauptfilter gedrückt wird. In einer bevorzugten Ausführungsform wird die Zufuhr von Öl/Wasser-Gemisch in diese Kammer dabei unterbunden.

Die Zuführung von Steuerluft zur Erzeugung eines Überdrucks in der Kammer kann auf verschiedene Arten und mit verschiedenen Ventilen durchgeführt werden. Dabei können grundsätzlich eine Zuleitung für die Steuerluft vorgesehen werden und Mittel, mit denen sich andere Öffnungen der Kammer verschließen lassen, um oberhalb des Kondensats den Überdruck in der Kammer aufbauen zu können. In einer Ausführungsform der Erfindung werden die Steuerluft und das Öl/Wasser-Gemisch beispielsweise über ein gemeinsames Membranventil in die Kammer des Kopfgehäuses geführt, welches auf verschiedene Arten ausgeführt sein und insbesondere von der Steuerluft angesteuert werden kann. Beispielsweise weist das Membranventil dazu eine Steuerluftkammer und eine Gemischkammer auf, welche durch eine Membran voneinander getrennt sind. Das Membranventil weist ferner einen Gemischeinlass zur Zuführung von Öl/Wasser-Gemisch in die Gemischkammer und einen Steuerlufteinlass zur Zuführung von Steuerluft in die Steuerluftkammer auf, wobei auch ein Gemischauslass zur Abführung des Öl/Wasser-Gemischs aus der Gemischkammer in die Kammer innerhalb des Kopfgehäuses und ein Steuerluftauslass zur Abführung der Steuerluft aus der Steuerluftkammer in die Kammer des Kopfgehäuses vorgesehen sind. Der Gemischeinlass dieses Ventils ist durch Beaufschlagung der Steuerluftkammer mit Steuerluft mittels der Membran verschließbar. Mit diesem Ventil kann somit Steuerluft in die Kammer des Kopfgehäuses eingebracht werden, indem diese durch die Steuerluftkammer in die Kammer des Kopfgehäuses strömt. Gleichzeitig kann aber auch der weitere Zufluss von Kondensat in die Kammer des Kopfgehäuses unterbunden werden, indem die Steuerluft die Membran so bewegt, dass sie den Gemischeinlass zum Membranventil verschließt. Ferner verschließt die Membran den Gemischeinlass auch, damit keine Luft durch diesen entweichen kann.

Damit die Steuerluft für diese Ansteuerung der Membran einen ausreichenden Druck innerhalb der Steuerluftkammer aufbauen kann, hat der Steuerluftauslass des Membranventils vorzugsweise einen geringen Öffnungsquerschnitt als der Steuerlufteinlass. So baut die Steuerluft zunächst schnell Druck innerhalb der Steuerluftkammer auf und bewegt die Membran, bevor sie weiter Überdruck innerhalb der Kammer des Kopfgehäuses aufbaut.

Durch die Membran kann der Zulauf von Öl/Wasser-Gemisch zum Membranventil während der Steuerluftbeaufschlagung zwar unterbunden werden, dies kann jedoch auch ergänzt werden durch eine grundsätzliche Unterbrechung des Zuflusses an zu reinigendem Gemisch zu der Öl/Wasser-Trennvorrichtung bzw. dem Membranventil.

Der Druck an Gemisch auf die Membran könnte sonst so hoch werden, dass sie wieder öffnet.

Zweckmäßigerweise wird Steuerluft mit Überdruck verwendet, wobei der Überdruck geeignet gewählt werden kann. Vorzugsweise liegt er in der Größenordnung von 0,3-1bar, insbesondere jedoch bei etwa 0,5bar. Ist die Öl/Wasser-Trennvorrichtung an eine Druckluftleitung mit einem höheren Druck angeschlossen, kann vor oder auch nach der Zuführung der Steuerluft zu der Vorrichtung eine entsprechende Druckminderung stattfinden. Beispielsweise kann dabei eine Druckminderung von 7bar auf 0,5bar oder andere Drücke erfolgen.

Auch hier gilt, dass ein Überdruck in dieser Größenordnung den Vorteil hat, dass die Öl/Wasser-Trennvorrichtung damit nicht als Druckbehälter im Sinne der Druckgeräterichtlinie (DGRL) der Europäischen Union gilt.

Die Öl/Wasser-Trennvorrichtung kann neben der Grundfunktion des Abscheidens von ölhaltigen Bestandteilen im Hauptfilter weitere Funktionselemente umfassen. Beispielsweise kann vorgesehen sein, dass das Kopfgehäuse der Vorrichtung eine Einlassöffnung aufweist, über welche Öl/Wasser-Gemisch zunächst in eine Druckentlastungskammer innerhalb des Kopfgehäuses führbar ist, aus welcher das Öl/Wasser-Gemisch wiederum in die Kammer des Kopfgehäuses führbar ist. Aus dieser Druckentlastungskammer kann mit dem Kondensat mitgeführte Druckluft entweichen, was vorzugsweise bei Durchströmung eines weiteren Filters erfolgt, um die entweichende Luft zu reinigen bzw. das Entweichen von ölhaltigen Bestandteilen zu vermeiden. Damit bei der Druckbeaufschlagung der Vorrichtung keine Luft durch diesen Druckentlastungsauslass entweichen kann, kann dieser mit einem absperrbaren Ventil verschließbar sein, das ebenfalls durch die Steuereinheit angesteuert werden kann. Wird ein beschriebenes Membranventil verwendet, kann die Druckentlastungskammer über den Gemischeinlass an die Gemischkammer des Membranventils angeschlossen sein.

Um bereits vor dem Hauptfilter freie Ölanteile aus dem Kondensat zu entfernen, kann in einer Ausführungsform der Erfindung vorgesehen sein, diese freien Ölanteile, welche auf dem Öl/Wasser-Gemisch in der Kammer des Kopfgehäuses aufschwimmen, über eine Sammelableitung aus der Kammer abzuleiten. Die Sammelableitung kann an einen Sammelbehälter angeschlossen sein. Auch diese Sammelableitung ist vorzugsweise bei der Beaufschlagung der Kammer mit Steuerluft durch die Steuereinheit verschließbar. So kann auch durch diese Leitung keine Luft entweichen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung einer ersten Ausführungsform der erfindungsgemäßen Öl/Wasser-Trennvorrichtung im Normalbetrieb,
- Fig. 2: eine schematische Darstellung einer zweiten Ausführungsform der erfindungsgemäßen Öl/Wasser-Trennvorrichtung mit Druckluftbeaufschlagung im Normalbetrieb,
- Fig. 3: eine schematische Darstellung der Öl/Wasser-Trennvorrichtung gemäß Fig.2 bei Druckluftbeaufschlagung;
- Fig. 4: ein Membranventil einer Öl/Wasser-Trennvorrichtung bei Normalbetrieb;
- Fig. 5: ein Membranventil einer Öl/Wasser-Trennvorrichtung bei Druckluftbeaufschlagung; und
- Fig. 6: eine schematische Darstellung einer dritten Ausführungsform der erfindungsgemäßen Öl/Wasser-Trennvorrichtung im Normalbetrieb,

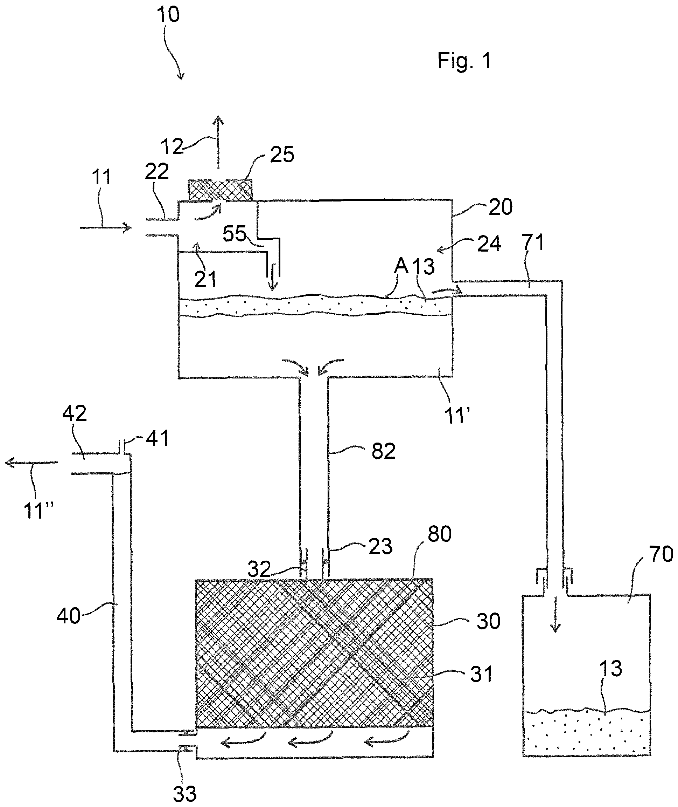

Die in Fig. 1 schematisch dargestellte erste Ausführungsform einer erfindungsgemäßen Öl/Wasser-Trennvorrichtung 10 umfasst verschiedene Komponenten. Wenigstens weist die Vorrichtung dabei einen Hauptfilter 30 auf, der dazu ausgebildet ist, Öl/Wasser-Gemisch bzw. Kondensat 11 von einem nicht dargestellten Druckluftkompressor aufzubereiten, indem ölhaltige Bestandteile aus diesem Kondensat getrennt werden. Dies kann beispielsweise durch Adsorption an einem Filtermaterial erfolgen, wobei der Hauptfilter 30 vorzugsweise ein Material umfasst, das Flüssigkeiten mit fein dispergierten, selbst emulgierten Ölen einleitfähig trennen kann. Beispielsweise sind hierzu oleophiles, schmelzgesponnenes Polymer mit verteilungsorientierter Oberflächenverdichtung und -gestalt, sowie Aktivkohle in angepasster Konsistenz und Größe zur Aufnahme feinster Öltröpfchen und oleophiles, geschäumtes Polymer geeignet. Der Hauptfilter 30 weist ein Hauptfiltergehäuse 80 auf, in den ein entsprechendes Adsorptionsfiltermaterial 31 eingebracht ist.

Die Öl/Wasser-Trennvorrichtung 10 umfasst im gezeigten Ausführungsbeispiel ferner eine Steuereinheit 60, mit welcher die Funktionen der Vorrichtung gesteuert werden können. Dies kann insbesondere die Auswertung von Sensorsignalen verschiedener Detektoren, das Öffnen und Schließen von Ventilen und die Erfassung von Zeiträumen umfassen. Ferner weist die Steuereinheit 60 vorzugsweise Eingabemittel zur manuellen Eingabe von Steuerbefehlen auf. Über diese Steuerbefehle können beispielsweise Wartungsarbeiten an dem Apparat durchgeführt werden. Auch kann die Steuereinheit 60 Anzeigemittel beispielsweise zum Anzeigen des Status der Vorrichtung und/oder von Warn- und Servicemeldungen umfassen.

Die Öl/Wasser-Trennvorrichtung 10 arbeitet nach dem hydrostatischen Prinzip der korrespondierenden Wassersäulen. Dazu ist typischerweise oberhalb des Hauptfilters 30 ein Kopfgehäuse 20 angebracht. Das Kopfgehäuse 20 ist über eine Verbindungsöffnung 23 und eine sich daran anschließende Kondensatleitung 82 mit dem Hauptfilter 30 verbunden. Die Länge der Kondensatleitung 82 bzw. der Abstand zwischen dem Hauptfiltergehäuse 80 und dem Hauptfilter 30 bestimmt den hydrostatischen Druck mit dem das Kondensat durch den Hauptfilter 30 gedrückt wird. Bei dem Hauptfilter 30 kann es sich insbesondere um wenigstens einen auswechselbaren Kartuschenfilter handeln, der temporär über einen Einlassstutzen 32 mit dem Kopfgehäuse 20 verbunden wird. Dies kann insbesondere über eine dichte Schraubverbindung erfolgen.

In das Kopfgehäuse 20 ist über eine Einlassöffnung 22 Kondensat in das Kopfgehäuse 20 einbringbar. Dieses Kondensat 11 stammt insbesondere von einem Druckluftkompressor und soll durch die ÖI/Wasser-Trennvorrichtung 10 aufbereitet werden, indem ölhaltige Bestandteile aus dem Kondensat 11 entfernt werden. Das Kondensat 11 strömt dabei in das Kopfgehäuse 20 und von dort durch Schwerkraft in den darunter liegenden Hauptfilter 30. An den Hauptfilter 30 schließt sich über einen Auslassstutzen 33 eine Steigleitung 40 an, über die aufbereitetes Kondensat 11" aus der Öl/Wasser-Trennvorrichtung 10 austritt. Auch dieser Auslassstutzen 33 kann über eine dichte Schraubverbindung mit der Steigleitung 40 verbunden sein, so dass der Hauptfilter 30 insgesamt auswechselbar ist. In dem Maß, in dem neues Kondensat 11 in das Kopfgehäuse 20 zufließt, verlässt aufbereitetes Kondensat 11" den Apparat am Reinwasseraustritt 42 zum Abwasserkanal hin.

Auf der Höhe des sich so einstellenden Kondensatpegels innerhalb des Kopfgehäuses 20 kann eine Sammelableitung 71 vorgesehen sein, welche in Verbindung mit einem Sammelbehälter 70 steht. Bei dem Ventil 72 handelt es sich beispielsweise über ein durch die Steuereinheit 60 ansteuerbares Magnetventil. Über diese Sammelableitung 71 können freie Ölanteile 13, die innerhalb des Kopfgehäuses 20 auf dem Kondensat 11' aufschwimmen, abgeführt und gesammelt werden. Diese freien Ölanteile haben eine Dichte < 1kg/dm³. Bevor das Kondensat 11 dem Hauptfilter 30 zugeführt wird, erfolgt somit eine Abscheidung freier Ölanteile, so dass vorgereinigtes Kondensat 11' zum Hauptfilter 30 gelangt. Die Abscheidung von freien Ölanteilen kann jedoch auch in eine Kartusche des Hauptfilters 30 integriert sein.

Der Einlassöffnung 22 vor- oder nachgeschaltet kann ferner eine Vorrichtung zur Abscheidung von schweren, sedimentartigen Bestandteilen mit einer Dichte > 1kg/dm³ sein (nicht dargestellt). Diese arbeitet nach dem Prinzip der Schwerkrafttrennung, so dass sich diese Bestandteile am Boden der Vorrichtung absetzen und nicht in den Hauptfilter 30 gelangen.

Wie in den Figuren gezeigt, weist das Kopfgehäuse 20 eine Kammer 24 auf, in welche Kondensat 11 einfließt und von dort dem Hauptfilter 30 zugeführt wird. Diese Kammer 24 stellt die Hauptkammer des Kopfgehäuses 20 dar, welche jedoch ergänzt werden kann durch eine zweite Kammer in Form einer Druckentlastungskammer 21. In diese wird das Kondensat 11 zunächst für eine Druckentlastung eingebracht. In dieser Druckentlastungkammer 21 kann mitgeführte Druckluft aus dem Kompressor abgeführt werden, wobei diese Luft über einen Austritt entweichen kann. Dieser Entlastungsluftablass 12 kann durch eine Filtermatte 25 geführt werden und auch mit einem absperrbaren Ventil versehen sein (nicht dargestellt).

Aus dieser Druckentlastungskammer 21 gelangt das Kondensat 11 in die Kammer 24 des Kopfgehäuses 20, freie Ölanteile 13 werden über die Sammelableitung 71 abgeführt und das so vorgereinigte Kondensat 11' fließt in den Hauptfilter 30 ab. Dies stellt den Normalbetrieb der Vorrichtung 10 dar, bei der sich ein bestimmter Kondensatpegel innerhalb der Kammer 24 einstellt, bei dem stetig freie Ölanteile 13 abgeführt und gereinigtes Kondensat 11" über die Steigleitung 40 in einen Abwasserkanal abgeleitet werden.

Aufgrund des sich einstellenden hydrostatischen Drucks wird das zu reinigende Kondensat bereits mit ausreichendem Überdruck in den Hauptfilter 30 gedrückt.

Durch eine Sättigung der oberen Schichten des Filters 30 oder durch Bildung von biologischen Schleimschichten kann jedoch der Durchflusswiderstand des Filters 30 zusätzlich noch weiter ansteigen. Findet dies statt, erhöht sich der Kondensatpegel innerhalb der Kammer 24, was zu einem Überlaufen der Vorrichtung führen kann. Ferner fließen bei erhöhtem Kondensatpegel nicht nur freie Ölanteile in den Sammelbehälter 70 ab, sondern auch ungereinigtes Kondensat.

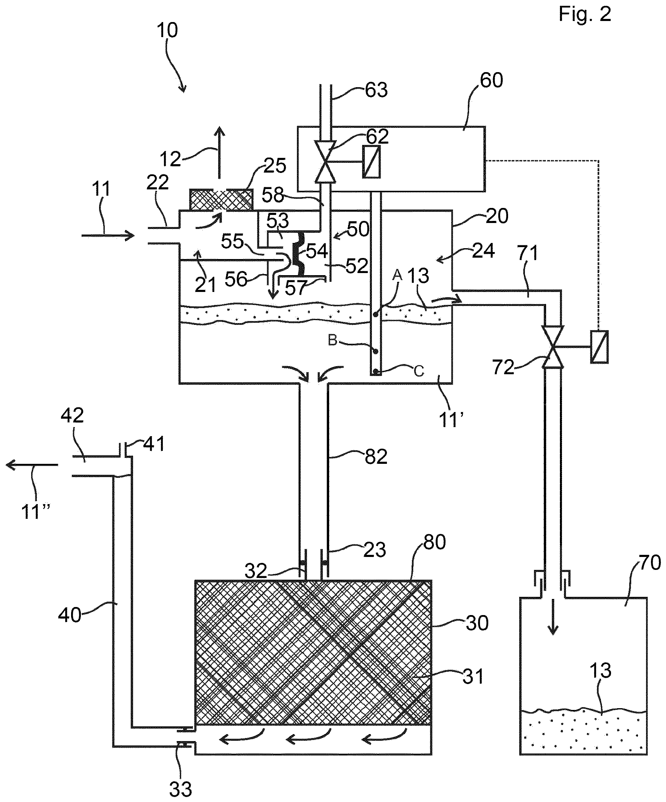

Obwohl die Vorrichtung 10 im Normalbetrieb bereits mit Überdruck betrieben wird, kann der Normalbetrieb der Vorrichtung 10 durch einen Druckbetrieb ergänzt werden, bei dem das Kondensat 11' durch noch höheren Überdruck durch den Hauptfilter 30 gedrückt werden kann, wie es in der Fig. 2 dargestellt ist. Dies erfolgt vorzugsweise durch eine Beaufschlagung der Kammer 24 mit Steuerluft 14 über eine Steuerluftleitung 63.

Um einen erhöhten Kondensatpegel innerhalb der Kammer 24 festzustellen, ist wenigstens ein Sensormittel 64 vorgesehen, welches den Füllstand an Kondensat 11' misst. Dieses Sensormittel steht in Verbindung mit der Steuereinheit 60, welche die Signale des Sensormittels 64 auswertet und bei einem erhöhten Füllstand die Beaufschlagung mit Steuerluft einleitet. Dazu steuert die Steuereinheit 60 ein Ventil 62 in der Steuerluftleitung 63 an, mit welchem die Zuführung von Steuerluft 14 zu der Kammer 24 reguliert werden kann. Die Sammelableitung 71 weist ein Ventil 72 auf. Bei dem Ventil 72 handelt es sich beispielsweise über ein durch die Steuereinheit 60 ansteuerbares Magnetventil.

Vorzugsweise wird Steuerluft 14 mit einem Überdruck von bis zu 0,5 bar in die Kammer 14 eingeleitet, so dass sich zwischen der Kammer 24 und dem Auslassstutzen 33 des Hauptfilters 30 eine Druckdifferenz einstellt, durch welche das Kondensat 11' durch den Filter 30 gedrückt wird. Ist die Vorrichtung 10 dafür an eine Druckluftleitung mit einem höheren Druck angeschlossen, kann vor und/oder in dem Ventil 62 eine entsprechende Druckminderung stattfinden. Beispielsweise kann dabei eine Druckminderung von 7bar auf 0,5bar erfolgen, was durch eine Drosselung erreicht werden kann. Alternativ oder ergänzend kann eine Druckminderung auch hinter dem Ventil 62 stattfinden, so dass diese beispielsweise auch durch das Ventil 50 realisiert werden kann.

Die Druckbeaufschlagung setzt voraus, dass die Kammer 24 und die Verbindung zwischen Kammer 24 und dem Hauptfilter 30 so dicht ausgeführt sind, dass an dieser Stelle keine Luft oder zumindest keine nennenswerten Mengen an Luft entweichen können. Ferner kann vorgesehen sein, dass die Steuereinheit 60 bei der Druckbeaufschlagung das Ventil 72 des Sammelbehälters 70 für die freien Ölanteile 13 ebenfalls dicht verschließt. Darüber hinaus wird zweckmäßigerweise der Zufluss an neuem Kondensat 11 während der Druckbeaufschlagung unterbunden, um auch diesen Zulauf abzudichten.

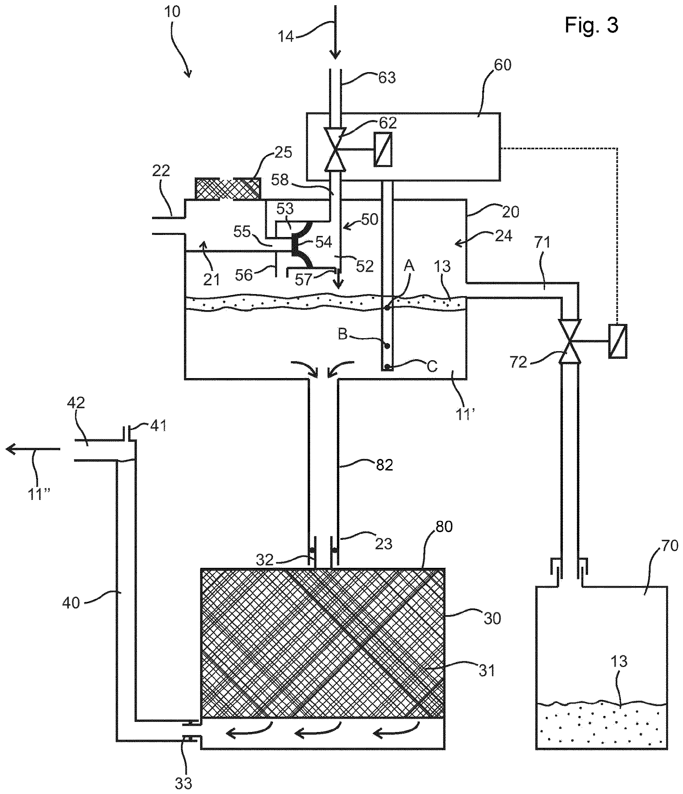

Im Ausführungsbeispiel der Figuren 2 und 3 ist dazu innerhalb der Kammer 24 des Kopfgehäuses 20 ein Membranventil 50 vorgesehen, welches an den Kondensatzufluss und die Steuerluftzuleitung 63 angeschlossen ist. Das Membranventil 50 umfasst zwei Kammern, eine Steuerluftkammer 52 und eine Gemischkammer 53. Diese beiden Kammern sind durch eine elastische Membran 54 voneinander getrennt. Über einen Gemischeinlass 55 fließt Kondensat 11 aus der Druckentlastungskammer 21 in die Gemischkammer 53 des Membranventils 50. Fig. 2 zeigt, wie das Kondensat im Normalbetrieb der ÖI/Wasser-Trennvorrichtung aus der Gemischkammer 53 in die Kammer 24 des Kopfgehäuses fließt. Dies erfolgt über einen Gemischauslass 56. In dem Maß, in dem Kondensat 11 aus dem Gemischauslass 56 in die Kammer 24 zufließt, verlässt aufbereitetes Kondensat 11" den Apparat am Reinwasseraustritt zum Abwasserkanal hin. Dabei stellt sich ein bestimmter Kondensatpegel in der Kammer 24 ein.

Erhöht sich der Durchflusswiderstand des Hauptfilters 30, steigt dieser Kondensatpegel an und ein Füllstand A stellt beispielsweise einen kritischen maximalen Füllstand dar, der nicht überschritten werden sollte. Wird über das Sensormittel 64 dieser erhöhte Kondensatpegel A festgestellt, öffnet die Steuereinheit 60 das Ventil 62 und führt so Steuerluft 14 in die Steuerluftkammer 52 des Membranventils 50. Dabei ist das Sensormittel 64 vorzugsweise so ausgestaltet, dass nur der Pegel an Kondensat erfasst wird, während freie Ölanteile und Luft oberhalb des Kondensats ignoriert werden. Es kann somit zwischen Kondensat und Öl bzw. Luft unterscheiden. Das Sensormittel 64 erfasst so den Füllstand an Kondensat 11' und nicht den Füllstand an freien Ölanteile 13 oberhalb des Kondensats 11'.

Die Steuerluft kann über einen Steuerluftauslass 57 aus der Steuerluftkammer 52 austreten und so in die Kammer 24 des Kopfgehäuses 20 gelangen. Dabei hat der Steuerluftauslass 57 vorzugweise einen geringeren Querschnitt als der Steuerlufteinlass 58, so dass sich innerhalb der Steuerluftkammer 52 schnell ein Druck aufbauen lässt, wenn Steuerluft 14 eingebracht wird. Durch diesen Druck bewegt sich die Membran 54 innerhalb des Ventils 50 nach links in Richtung des Gemischeinlasses 55 und verschließt diesen. So kann kein Kondensat 11 mehr in die Kammer 24 nachfließen. Vorzugsweise unterbricht die Steuereinheit 60 gleichzeitig auch den Zufluss an Kondensat 11 in die Druckentlastungskammer 21. Dies kann insbesondere mit einer Zwischensammlung des Kondensats vor der Öl/Wasser-Trennvorrichtung 10 kombiniert werden oder das Kondensat wird einer anderen, parallel geschalteten Öl/Wasser-Trennvorrichtung zugeführt.

Durch den Verschluss des Gemischeinlasses 55 mittels der Membran 54 kann auf diesem Weg auch keine Luft aus der Kammer 24 in die Druckentlastungskammer 21 entweichen. Vorzugsweise schließt die Steuereinheit 60 auch das Ventil 72 zum Sammelbehälter 70. Durch weitere Zuführung von Steuerluft 14 in die Kammer 24 erhöht sich darin der Druck, wodurch das Kondensat 11 durch den Hauptfilter 30 und die Steigleitung 40 zum Auslass 42 gedrückt und dabei gereinigt werden kann. So kann der erhöhte Durchflusswiderstand des Filters überwunden und die Vorrichtung ohne Überlaufen in Betrieb gehalten werden. Dabei dient die Steuerluft 14 erst zum Verschließen des Gemischeinlasses 55 durch die Membran 55 und nachfolgend zum Druckaufbau innerhalb der Kammer 24. Diese Situation ist in der Fig. 3 dargestellt. Der Kondesatpegel hat den maximalen Füllstand A erreicht und die Membran 54 verschließt den Gemischeinlass 55.

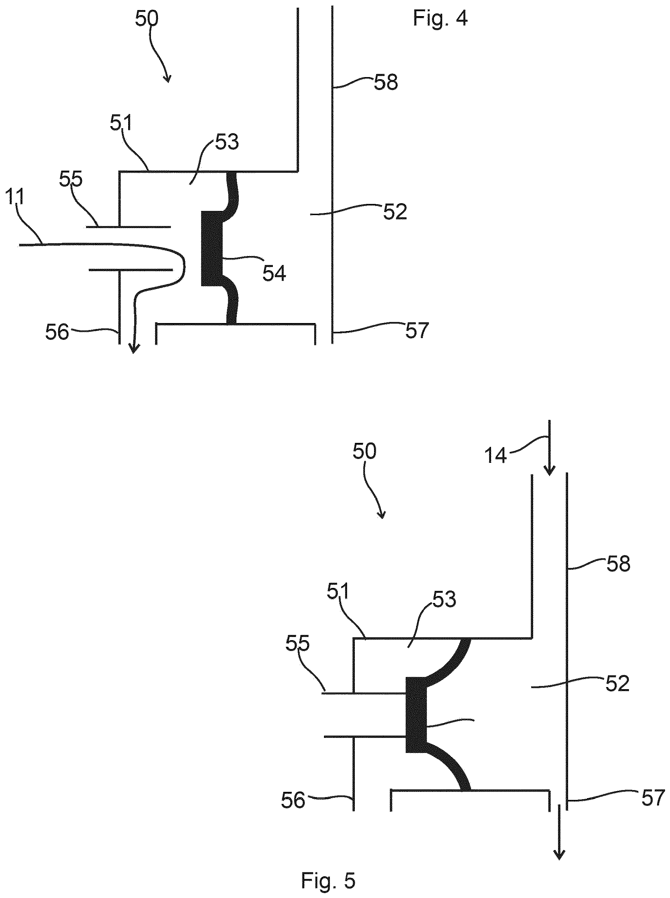

Die Figuren 4 und 5 zeigen die Funktionsweise des Membranventils 50 in einer schematischen Darstellung, wobei die beiden Kammern 52 und 53 innerhalb eines Ventilgehäuses 51 ersichtlich sind, die durch eine elastische Membran 54 voneinander getrennt sind. Im Normalbetrieb (Fig. 4) steht die Membran 54 so, dass der Gemischeinlass 55 offen ist und Kondensat vom Gemischeinlass 55 durch die Gemischkammer 53 und aus dem Gemischauslass 56 herausfließen kann. Wird Steuerluft 14 in den Steuerlufteinlass 58 eingeführt, baut sich innerhalb der Steuerluftkammer 52 Druck auf, durch welchen zunächst die Membran 54 gegen den Gemischeinlass 55 gedrückt wird, wodurch sie diesen verschließt. Die Steuerluft tritt aus dem Steuerluftauslass 57 aus und baut so Druck in der Kammer des Kopfgehäuses 20 auf.

Die Steuerluft 14 kann von der Steuereinheit 60 unter verschiedenen Bedingungen wieder abgeschaltet werden. Beispielsweise kann sie abgeschaltet werden, wenn der Kondensatpegel einen tieferen Füllstand B erreicht hat. Wird die Steuerluft 14 abgeschaltet, kehrt die Membran 54 wieder in ihre ursprüngliche Lage zurück (Fig. 2) und gibt den Gemischeinlass 55 frei, so dass neues Kondensat 11 in die Kammer 24 einfließen kann. Steigt der Kondensatpegel wieder bis zum Füllstand A an, könnte erneut eine Druckbeaufschlagung erfolgen, so dass stetig zwischen Normalbetrieb und Druckbeaufschlagung gewechselt wird. Dabei bewegt sich das Niveau des Kondensats zwischen den Punkten A und B.

Ferner kann eine Störmeldung an der Steuereinheit 60 erfolgen, wenn der Kondensatpegel in der Kammer 24 auch bei Druckbeaufschlagung einen tieferen Füllstand B nicht erreicht, d.h. oberhalb dieses Pegels bleibt. Dies deutet darauf hin, dass beispielsweise der Filter 30 verblockt ist und/oder das Membranventil 50 defekt ist.

Die Steuerluft 14 kann auch nach einem vorgegebenen Zeitraum abgeschaltet werden, wenn beispielsweise Erfahrungswerte zeigen, dass der Füllstand in der Kammer 24 nach diesem Zeitraum auf einen vorgegebenen Pegel abgesunken ist, der dem Niveau B entspricht. Auch hier kann sich bei erneutem Pegelanstieg eine weitere Druckbeaufschlagung anschließen. Bei dieser Ausführungsform muss somit nur ein Niveau A definiert und eine Zeitsteuerung realisiert werden.

Ferner kann ein minimaler Füllstand C definiert werden, unter den das Niveau an Kondensat nicht fallen darf. Dieser liegt unterhalb des Niveaus B und somit unterhalb des Arbeitsbereiches zwischen A und B. Sofern der Kondensatpegel trotz abgeschalteter Steuerluft unter diesen minimalen Füllstand C fällt, deutet dies darauf hin, dass beispielsweise das Magnetventil 62 der Steuerluft 14 defekt ist und nachwievor Steuerluft in das Membranventil 50 strömt. Auch in diesem Fall kann eine Störmeldung an der Steuereinheit 60 ausgegeben werden, denn der Behälter könnte anderenfalls auslaufen. Der optionale Punkt C stellt somit einen Alarmpunkt dar.

Ferner kann vorgesehen sein, dass die Steuereinheit 60 Servicemeldungen ausgibt. Dies kann beispielsweise erfolgen, wenn eine vorgegebene Zykluszahl erreicht ist oder die Dauer eines Zyklus zu groß wird. Dabei stellt ein Zyklus einen Betrieb mit Druckbeaufschlagung dar, d.h. beispielsweise den Betrieb zwischen den Niveaus A und B. Auch kann eine Servicemeldung ausgegeben werden, wenn ein Serviceintervall abgelaufen ist (z.B. 6 Monate).

Ein Betrieb mit Druckbeaufschlagung kann auch zu Wartungszwecken durchgeführt werden. Dazu kann vom Wartungspersonal ein entsprechender Servicebefehl an der Steuereinheit 60 eingegeben werden, durch den ein Steuerbefehl erzeugt wird, welcher die beschriebene Zuführung von Steuerluft 14 bewirkt. So kann der Hauptfilter 30 leer gedrückt und anschließend ausgetauscht werden, wenn es sich um eine Kartusche handelt. Dazu werden die Verschraubungen am Einlassstutzen 32 und Auslassstutzen 33 gelöst, der Hauptfilter 30 abgeschraubt und ein frischer Filter angeschraubt. Würde man die Kammer 24 dagegen für diesen Zweck mit einer Pumpe leerpumpen, könnte durch Rückfluss Kondensat aus dem Filter gesaugt werden. Dies würde ein weiteres Ventil im Bereich der Verbindungsöffnung 23 erfordern.

Von den Sensorniveaus A, B und C zu unterscheiden sind die hydraulischen Niveaus innerhalb der Öl/Wasser-Trennvorrichtung, welche nach dem hydrostatischen Prinzip arbeitet. Hydraulische Niveaus ergeben sich am Kondensatauslauf der Auslassöffnung 42, am Ölauslauf der Sammelableitung 71 und durch den Pegel des Kondensats über dem Filter.

Die in den beschriebenen Ausführungsbeispielen der Erfindung verwendeten Ventile stellen lediglich Beispiele dar, wobei diese und andere Ventile auch durch jegliche andere Arten von Ventilen gebildet werden, die sich für die jeweilige Anwendung eignen. Beispielsweise kann das Magnetventil 72 auch wie das Membranventil 50 ausgeführt sein. Ferner können für beide Ventile andere Ventilarten wie Kugelventile, Schieberventile, Schlauchventile, etc. eingesetzt werden.

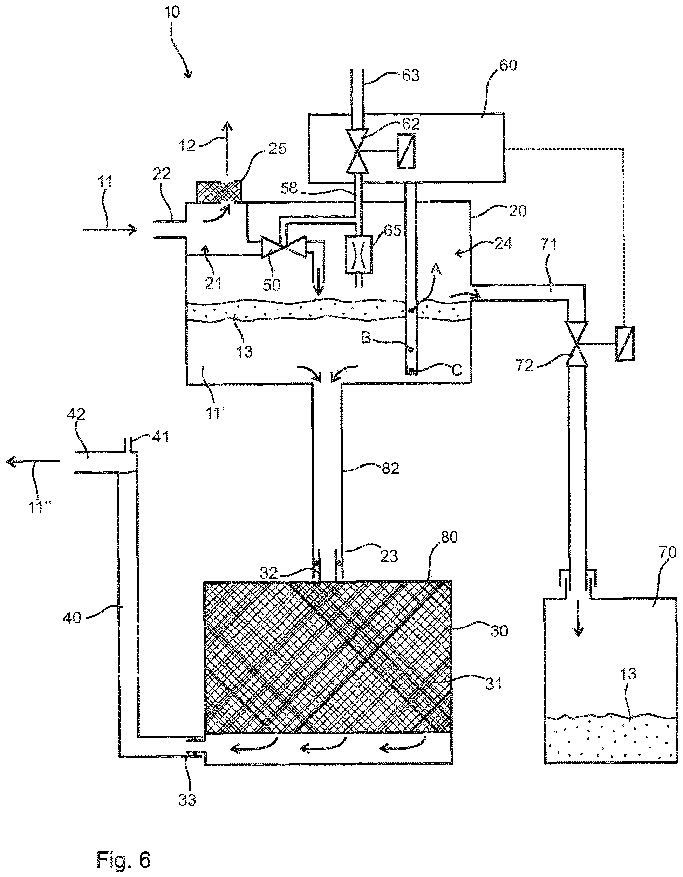

Fig. 6 zeigt beispielhaft eine zweite Ausführungsform der erfindungsgemäßen Öl/Wasser-Trennvorrichtung 10' im Normalbetrieb. Die wesentlichen Komponenten und Funktionen dieser Öl/Wasser-Trennvorrichtung 10' können denen der ersten Ausführungsform gemäß Fig. 2 entsprechen. Das Ventil 50 ist jedoch nicht als Membranventil mit den zuvor beschriebenen Funktionen ausgebildet. Vielmehr kann eine andere Art von Ventil verwendet werden, mit dem der Zufluss von Kondensat in die zweite Kammer 24 gesteuert werden kann. Kondensat 11 fließt weiterhin aus der Druckentlastungskammer 21 durch das Ventil 50 in die zweite Kammer 24, wobei das Ventil 50 insbesondere durch die Steuerluft angesteuert werden kann, wenn das Kondensat 11' das Niveau A erreicht. Dazu verzweigt sich der Steuerlufteinlass 58, so dass ein Teil der Steuerluft zu dem Ventil 50 geführt werden kann, um dieses anzusteuern. Weitere Steuerluft wird zunächst einer Drosselung 65 zugeführt, bevor sie in die zweite Kammer 24 gelangt, um dort den Druck zu erhöhen. Auf diese Weise kann innerhalb der Vorrichtung eine Druckminderung für die Steuerluft erfolgen. Auf diese Druckminderung kann jedoch auch verzichtet werden, wenn die Steuerluft der Vorrichtung bereits mit dem gewünschten Druck zuführbar ist, bzw. eine Drosselung an einer anderen Stelle stattfindet.

Das Ventil 50 ist vorzugsweise so ausgebildet, dass es sich wieder öffnet, wenn die Steuerluft abgeschaltet wird. Das Ventil kann jedoch auch durch die Steuereinheit 60 ansteuerbar sein, um beispielsweise ein Öffnen des Ventils zu bewirken. Auch das Schließen des Ventils 50 kann durch die Steuereinheit 60 auslösbar sein.

### Bezugszeichenliste:

- 10,10': Öl/Wasser-Trennvorrichtung
- 11: Öl/Wasser-Gemisch, Kondensat, aufzubereiten
- 11': Öl/Wasser-Gemisch, Kondensat, nach Abtrennung freier Ölanteile
- 11": Kondensat, nach Durchlaufen des Hauptfilters
- 12: Entlastungsluftablass
- 13: Freie Ölanteile
- 14: Luftzufuhr, Steuerluft
- 20: Kopfgehäuse
- 21: Erste Kammer, Druckentlastungskammer
- 22: Einlassöffnung
- 23: Verbindungsöffnung
- 24: Zweite Kammer
- 25: Filtermatte
- 30: Hauptfilter
- 31: Adsorptionsfiltermaterial
- 32: Einlassstutzen
- 33: Auslassstutzen
- 40: Steigleitung
- 41: Entlüftungsöffnung
- 42: Auslassöffnung
- 50: Ventil, Membranventil
- 51: Ventilgehäuse
- 52: Steuerluftkammer
- 53: Gemischkammer
- 54: Membran
- 55: Gemischeinlass
- 56: Gemischauslass
- 57: Steuerluftauslass
- 58: Steuerlufteinlass
- 60: Steuereinheit
- 62: Ventil, Magnetventil
- 63: Druckluftzuleitung
- 64: Sensormittel, Füllstandssensor
- 65: Drossel
- 70: Sammelbehälter, Kanister
- 71: Sammelableitung
- 72: Ventil, Magnetventil
- 80: Hauptfiltergehäuse
- 82: Kondensatleitung

- A: Füllstand, maximal
- B: Füllstand
- C: Füllstand, minimal

## Patentansprüche

1. Öl/Wasser-Trennvorrichtung (10;10') zum Entfernen ölhaltiger Bestandteile aus einem Öl/Wasser-Gemisch, umfassend ein Kopfgehäuse, eine Kondensatleitung und einen Hauptfilter (30), welcher zur Abtrennung von ölhaltigen Bestandteilen aus dem Öl/Wasser-Gemisch ausgebildet ist, wobei dem Hauptfilter (30) zu reinigendes Öl/Wasser-Gemisch aus dem Kopfgehäuse (20) über die Kondensatleitung (82) zuführbar ist und nach Durchlauf durch den Hauptfilter (30) aus der Öl/Wasser-Trennvorrichtung (10; 10') abführbar ist, und die Öl/Wasser-Trennvorrichtung (10;10') für eine Zu- und Abführung dieser Flüssigkeiten nach dem hydrostatischen Prinzip ausgebildet ist, wobei das Kopfgehäuse (20) oberhalb des Hauptfilters (30) angeordnet ist und der Abstand zwischen Kopfgehäuse (20) und Hauptfilter (30) mindestens 0,5 m beträgt, so dass sich auf den Hauptfilter (30) ein hydrostatischer Druck von mindestens 0,05 bar ergeben kann, **dadurch gekennzeichnet, dass** die Kondensatleitung (82) längenveränderlich ist.

2. Öl/Wasser-Trennvorrichtung (10;10') nach Anspruch 1, **dadurch gekennzeichnet, dass** der Abstand zwischen Kopfgehäuse (20) und Hauptfilter (3) 1 bis 3 m beträgt, so dass sich auf den Hauptfilter (30) ein hydrostatischer Druck von 0,1 bar bis 0,3 bar ergeben kann.

3. Öl/Wasser-Trennvorrichtung (10;10') nach Anspruch 1 oder 2, **dadurch gekennzeichnet, dass** die Öl/Wasser-Trennvorrichtung (10;10') weiterhin eine Steuereinheit (60) aufweist, die dazu ausgebildet ist, temporär eine Beaufschlagung der Öl/Wasser-Trennvorrichtung (10;10') mit Steuerluft (14) durchzuführen.

4. Öl/Wasser-Trennvorrichtung nach Anspruch 3, **dadurch gekennzeichnet, dass** Sensormittel (64) zur Detektion des Füllstands des Öl/Wasser-Gemisches in der ÖI/Wasser-Trennvorrichtung (10;10') vorgesehen sind, welche in Verbindung mit der Steuereinheit (60) stehen.

5. ÖI/Wasser-Trennvorrichtung nach Anspruch 4, **dadurch gekennzeichnet, dass** die Steuereinheit (60) dazu ausgebildet ist, temporär die Beaufschlagung der ÖI/Wasser-Trennvorrichtung (10;10') mit Steuerluft (14) durchzuführen, wenn von den Sensormitteln (64) ein vorgegebener Füllstand (A) des Öl/Wasser-Gemisches detektiert wird.

6. Öl/Wasser-Trennvorrichtung nach einem der Ansprüche 3 bis 5, **dadurch gekennzeichnet, dass** die Steuereinheit (60) dazu ausgebildet ist, die Beaufschlagung der Öl/Wasser-Trennvorrichtung (10;10') mit Steuerluft (14) zu beenden, wenn von den Sensormitteln (64) ein vorgegebener Füllstand (B) des Öl/Wasser-Gemisches detektiert wird.

7. Öl/Wasser-Trennvorrichtung nach einem der Ansprüche 3 bis 6, **dadurch gekennzeichnet, dass** die Steuereinheit (60) dazu ausgebildet ist, die Beaufschlagung der Öl/Wasser-Trennvorrichtung (10;10') mit Steuerluft (14) aufgrund eines Steuerbefehls an die Steuereinheit (60) durchzuführen.

8. ÖI/Wasser-Trennvorrichtung nach einem der Ansprüche 3 bis 7, **dadurch gekennzeichnet, dass** die Zufuhr von dem Öl/Wasser-Gemisch in die Öl/Wasser-Trennvorrichtung (10;10') während der Beaufschlagung mit Steuerluft (14) unterbunden wird.

9. Öl/Wasser-Trennvorrichtung nach einem der Ansprüche 3 bis 8, **dadurch gekennzeichnet, dass** die Öl/Wasser-Trennvorrichtung (10;10') weiterhin Mittel zur Zuführung des Öl/Wasser-Gemischs in eine Kammer (24) innerhalb des Kopfgehäuses (20) und eine Verbindungsöffnung (23) zur Überführung des Öl/Wasser-Gemischs aus der Kammer (24) in den Hauptfilter (30) aufweist, und die Steuereinheit (60) dazu ausgebildet ist, temporär eine Beaufschlagung der Kammer (24) mit Steuerluft (14) durchzuführen, bei der Steuerluft (14) derart in die Kammer (24) innerhalb des Kopfgehäuses (20) geführt wird, dass das Öl/Wasser-Gemisch mittels Überdruck von der Kammer (24) durch die Verbindungsöffnung (23) in den Hauptfilter (30) gedrückt wird.

10. Öl/Wasser-Trennvorrichtung nach Anspruch 9, **dadurch gekennzeichnet, dass** die Steuerluft (14) und das Öl/Wasser-Gemisch über ein Membranventil (50) in die Kammer (24) des Kopfgehäuses (20) geführt werden, wobei das Membranventil (50) eine Steuerluftkammer (52) und eine Gemischkammer (53) aufweist, welche durch eine Membran (54) voneinander getrennt sind, und das Membranventil (50) einen Gemischeinlass (55) zur Zuführung des Öl/Wasser-Gemisches in die Gemischkammer (53) und einen Steuerlufteinlass (58) zur Zuführung von Steuerluft (14) in die Steuerluftkammer (52) aufweist, und ein Gemischauslass (56) zur Abführung des Öl/Wasser-Gemischs (11) aus der Gemischkammer (53) in die Kammer (24) des Kopfgehäuses (20) und ein Steuerluftauslass (57) zur Abführung der Steuerluft (14) aus der Steuerluftkammer (52) in die Kammer (24) des Kopfgehäuses (20) vorgesehen sind, wobei der Gemischeinlass (55) durch Beaufschlagung der Steuerluftkammer (52) mit Steuerluft (14) mittels der Membran (54) verschließbar ist.

11. ÖI/Wasser-Trennvorrichtung nach Anspruch 10, **dadurch gekennzeichnet, dass** der Steuerluftauslass (57) des Membranventils (50) einen geringen Öffnungsquerschnitt hat als der Steuerlufteinlass (58).

12. Öl/Wasser-Trennvorrichtung nach einem der Ansprüche 10 und 11, **dadurch gekennzeichnet, dass** der Zulauf des Öl/Wasser-Gemisches zum Membranventil (50) während der Steuerluftbeaufschlagung der Kammer (24) des Kopfgehäuses (20) durch die Steuereinheit (60) unterbrechbar ist.

13. Öl/Wasser-Trennvorrichtung nach einem der Ansprüche 9 bis 13, **dadurch gekennzeichnet, dass** das Kopfgehäuse (20) eine Einlassöffnung (22) aufweist, über welche das Öl/Wasser-Gemisch in eine Druckentlastungskammer (21) innerhalb des Kopfgehäuses (20) führbar ist, aus welcher das Öl/Wasser-Gemisch in die Kammer (24) des Kopfgehäuses (20) führbar ist.

14. Öl/Wasser-Trennvorrichtung nach Anspruch 14, **dadurch gekennzeichnet, dass** die Druckentlastungskammer (21) über den Gemischeinlass (55) an die Gemischkammer (53) des Membranventils (50) angeschlossen ist.

15. Öl/Wasser-Trennvorrichtung nach einem der Ansprüche 9 bis 15, **dadurch gekennzeichnet, dass** über eine Sammelableitung (71) freie Ölanteile (13), welche auf dem Öl/Wasser-Gemisch in der Kammer (24) des Kopfgehäuses (20) aufschwimmen, aus der Kammer (24) ableitbar sind.

16. Öl/Wasser-Trennvorrichtung nach Anspruch 16, **dadurch gekennzeichnet, dass** die Sammelableitung (71) bei der Beaufschlagung der Kammer (24) mit Steuerluft (14) durch die Steuereinheit (60) verschließbar ist.

17. Öl/Wasser-Trennvorrichtung nach einem der Ansprüche 1 bis 17, **dadurch gekennzeichnet, dass** der Hauptfilter (30) durch wenigstens eine Filterkartusche gebildet ist, welche temporär mit dem Kopfgehäuse (20) verbindbar ist.

## Claims

1. An oil/water separator (10; 10') for removing oleaginous constituents from an oil/water mixture, comprising a top housing, a condensate line and a main filter (30) which is designed to separate oleaginous constituents from the oil/water mixture, an oil/water mixture that is to be cleaned being feedable to the main filter (30) from the top housing (20) via the condensate line (82) and, after passing through the main filter (30), being dischargeable from the oil/water separator (10; 10'), and the oil/water separator (10; 10') being designed for feed and discharge of these liquids according to the hydrostatic principle, the top housing (20) being arranged above the main filter (30) and the distance between the top housing (20) and the main filter (30) being at least 0.5 m such that a hydrostatic pressure of at least 0.05 bar may result at the main filter (30),
**characterised in that** the condensate line (82) is variable in length.

2. The oil/water separator (10; 10') according to claim 1, **characterised in that** the distance between top housing (20) and main filter (3) is 1 to 3 m such that a hydrostatic pressure of 0.1 bar to 0.3 bar may result at the main filter (30).

3. The oil/water separator (10; 10') according to claim 1 or 2, **characterised in that** the oil/water separator (10; 10') also has a control unit (60) which is designed to temporarily charge the oil/water separator (10; 10') with control air (14).

4. The oil/water separator according to claim 3, **characterised in that** sensor means (64) for detecting the fill level of the oil/water mixture in the oil/water separator (10; 10') are provided and are connected to the control unit (60).

5. The oil/water separator according to claim 4, **characterised in that** the control unit (60) is designed to temporarily charge the oil/water separator (10; 10') with control air (14) when a predefined fill level (A) of the oil/water mixture is detected by the sensor means (64).

6. The oil/water separator according to one of claims 3 to 5, **characterised in that** the control unit (60) is designed to terminate the charging of the oil/water separator (10; 10') with control air (14) when a predefined fill level (B) of the oil/water mixture is detected by the sensor means (64).

7. The oil/water separator according to one of claims 3 to 6, **characterised in that** the control unit (60) is designed to charge the oil/water separator (10; 10') with control air (14) on the basis of a control command at the control unit (60).

8. The oil/water separator according to one of claims 3 to 7, **characterised in that** the supply of the oil/water mixture into the oil/water separator (10; 10') is stopped whilst the oil/water separator is being charged with control air (14).

9. The oil/water separator according to one of claims 3 to 8, **characterised in that** the oil/water separator (10; 10') also comprises means for supplying the oil/water mixture into a chamber (24) inside the top housing (20) and a connection opening (23) for transferring the oil/water mixture from the chamber (24) into the main filter (30), and the control unit (60) is designed to temporarily charge the chamber (24) with control air (14), with the control air (14) being guided into the chamber (24) inside the top housing (20) in such a way that the oil/water mixture is pushed from the chamber (24), through the connection opening (23) and into the main filter (30) by means of positive pressure.

10. The oil/water separator according to claim 9, **characterised in that** the control air (14) and the oil/water mixture are guided into the chamber (24) of the top housing (20) via a diaphragm valve (50), the diaphragm valve (50) having a control air chamber (52) and a mixing chamber (53) which are separated from one another by a diaphragm (54), and the diaphragm valve (50) having a mixing inlet (55) for supplying the oil/water mixture into the mixing chamber (53) and a control air inlet (58) for supplying control air (14) into the control air chamber (52), and a mixing outlet (56) for discharging the oil/water mixture (11) from the mixing chamber (53) into the chamber (24) of the top housing (20) and a control air outlet (57) for discharging the control air (14) from the control air chamber (52) into the chamber (24) of the top housing (20), the mixing inlet (55) being closable by means of the diaphragm (54) by charging the control air chamber (52) with control air (14).

11. The oil/water separator according to claim 10, **characterised in that** the control air outlet (57) of the diaphragm valve (50) has a smaller opening cross-section than the control air inlet (58).

12. The oil/water separator according to one of claims 10 and 11, **characterised in that** the flow of the oil/water mixture to the diaphragm valve (50) may be interrupted by the control unit (60) whilst the chamber (24) of the top housing (20) is being charged with control air.

13. The oil/water separator according to one of claims 9 to 13, **characterised in that** the top housing (20) has an inlet opening (22) via which the oil/water mixture can be guided into a pressure relief chamber (21) inside the top housing (20), from which the oil/water mixture can be guided into the chamber (24) of the top housing (20).

14. The oil/water separator according to claim 14, **characterised in that** the pressure relief chamber (21) is connected via the mixing inlet (55) to the mixing chamber (53) of the diaphragm valve (50).

15. The oil/water separator according to one of claims 9 to 15, **characterised in that** free oil fractions (13) which float on the oil/water mixture in the chamber (24) of the top housing (20) can be discharged from the chamber (24) via a collection offtake (71).

16. The oil/water separator according to claim 16, **characterised in that** the collection offtake (71) is closable by the control unit (60) whilst the chamber (24) is being charged with control air (14).

17. The oil/water separator according to one of claims 1 to 17, **characterised in that** the main filter (30) is formed by at least one filter cartridge which is temporarily connectable to the top housing (20).

## Revendications

1. Dispositif séparateur huile/eau (10 ; 10'), destiné à retirer des composants huileux d'un mélange huile/eau, comprenant un boîtier de tête, un conduit de condensat et un filtre principal (30), lequel est conçu pour séparer des composants huileux du mélange huile/eau, un mélange huile/eau qui doit être purifié pouvant être amené au filtre principal (30) à partir du boîtier de tête (20) via le conduit de condensat (82) et après avoir traversé le filtre principal (30), pouvant être évacué hors du dispositif séparateur huile/eau (10 ; 10'), et pour une alimentation et une évacuation desdits liquides, le dispositif séparateur huile/eau (10 ; 10') étant conçu selon le principe hydrostatique, le boîtier de tête (20) étant placé au-dessus du filtre principal (30) et l'écart entre le boîtier de tête (20) et le filtre principal (30) étant d'au moins 0,5 m, de telle sorte que sur le filtre principal (30) puisse être obtenue une pression hydrostatique d'au moins 0,05 bar,
**caractérisé en ce que** le conduit de condensat (82) est à longueur variable.

2. Dispositif séparateur huile/eau (10 ; 10') selon la revendication 1, **caractérisé en ce que** l'écart entre le boîtier de tête (20) et le filtre principal (3) est de 1 à 3 m, de telle sorte que sur le filtre principal (30) puisse être obtenue une pression hydrostatique de 0,1 bar à 0,3 bar.

3. Dispositif séparateur huile/eau (10 ; 10') selon la revendication 1 ou 2, **caractérisé en ce que** le dispositif séparateur huile/eau (10 ; 10') comporte par ailleurs une unité de commande (60) qui est conçue pour soumettre temporairement le dispositif séparateur huile/eau (10 ; 10') à un air de commande (14).

4. Dispositif séparateur huile/eau selon la revendication 3, **caractérisé en ce que** des moyens capteurs (64), lesquels sont en connexion avec l'unité de commande (60) sont prévus pour détecter le niveau de remplissage du mélange huile/eau dans le dispositif séparateur huile/eau (10 ; 10').

5. Dispositif séparateur huile/eau selon la revendication 4, **caractérisé en ce que** l'unité de commande (60) est conçue pour soumettre temporairement le dispositif séparateur huile/eau (10 ; 10') à un air de commande (14), lorsque les moyens capteurs (64) détectent un niveau de remplissage (A) prédéfini du mélange huile/eau.

6. Dispositif séparateur huile/eau selon l'une quelconque des revendications 3 à 5, **caractérisé en ce que** l'unité de commande (60) est conçue pour arrêter de soumettre le dispositif séparateur huile/eau (10 ; 10') à un air de commande (14) lorsque les moyens capteurs (64) détectent un niveau de remplissage (B) prédéfini du mélange huile/eau.

7. Dispositif séparateur huile/eau selon l'une quelconque des revendications 3 à 6, **caractérisé en ce que** l'unité de commande (60) est conçue pour soumettre le dispositif séparateur huile/eau (10 ; 10') à un air de commande (14) sur la base d'une instruction de commande adressée à l'unité de commande (60).

8. Dispositif séparateur huile/eau selon l'une quelconque des revendications 3 à 7, **caractérisé en ce que** l'alimentation du mélange huile/eau dans le dispositif séparateur huile/eau (10 ; 10') est coupée pendant qu'il est soumis à un air de commande (14).

9. Dispositif séparateur huile/eau selon l'une quelconque des revendications 3 à 8, **caractérisé en ce que** le dispositif séparateur huile/eau (10 ; 10') comporte par ailleurs des moyens destinés à alimenter le mélange huile/eau dans une chambre (24) à l'intérieur du boîtier de tête (20) et un orifice de liaison (23), destiné au transfert du mélange huile/eau à partir de la chambre (24) dans le filtre principal (30) et **en ce que** l'unité de commande (60) est conçue pour soumettre temporairement la chambre (24) à un air de commande (14), sachant que l'air de commande (14) est guidé à cet effet dans la chambre (24) à l'intérieur du boîtier de tête (20) de telle sorte que le mélange huile/eau soit pressé par une surpression de la chambre (24), à travers l'orifice de liaison (23) dans le filtre principal (30).

10. Dispositif séparateur huile/eau selon la revendication 9, **caractérisé en ce que** l'air de commande (14) et le mélange huile/eau sont guidés via une soupape à membrane (50) dans la chambre (24) du boîtier de tête (20), la soupape à membrane (50) comportant une chambre à air de commande (52) et une chambre à mélange (53), lesquelles sont séparées l'une de l'autre par une membrane (54) et **en ce que** la soupape à membrane (50) comporte une entrée de mélange (55), destinée à l'alimentation du mélange huile/eau dans la chambre à mélange (53) et une entrée d'air de commande (58), destinée à l'alimentation d'un air de commande (14) dans la chambre à air de commande (52), et **en ce qu'**une sortie de mélange (56) est prévue pour évacuer le mélange huile/eau (11) à partir de la chambre à mélange (53) dans la chambre (24) du boîtier de tête (20) et une sortie d'air de commande (57) est prévue pour évacuer l'air de commande (14) à partir de la chambre à air de commande (52) dans la chambre (24) du boîtier de tête (20), l'entrée de mélange (55) pouvant être fermée au moyen de la membrane (54) en soumettant la chambre à air de commande (52) à un air de commande (14).

11. Dispositif séparateur huile/eau selon la revendication 10, **caractérisé en ce que** la sortie d'air de commande (57) de la soupape à membrane (50) dispose d'une section transversale d'ouverture inférieure à celle de l'entrée d'air de commande (58).

12. Dispositif séparateur huile/eau selon l'une quelconque des revendications 10 et 11, **caractérisé en ce que** l'afflux du mélange huile/eau vers la soupape à membrane (50) est susceptible d'être interrompu par l'unité de commande (60) pendant que la chambre (24) du boîtier de tête (20) est soumise à un air de commande.

13. Dispositif séparateur huile/eau selon l'une quelconque des revendications 9 à 13, **caractérisé en ce que** le boîtier de tête (20) comporte un orifice d'entrée (22) via lequel le mélange huile/eau peut être guidé dans une chambre de décompression (21) à l'intérieur du boîtier de tête (20), à partir de laquelle le mélange huile/eau est susceptible d'être guidé dans la chambre (24) du boîtier de tête (20).

14. Dispositif séparateur huile/eau selon la revendication 14, **caractérisé en ce que** la chambre de décompression (21) est raccordée via l'entrée de mélange (55) sur la chambre à mélange (53) de la soupape à membrane (50).

15. Dispositif séparateur huile/eau selon l'une quelconque des revendications 9 à 15, **caractérisé en ce que** via un conduit collecteur d'évacuation (71), des fractions d'huile (13) libres, lesquelles surnagent sur le mélange huile/eau dans la chambre (24) du boîtier de tête (20) sont susceptibles d'être évacuées hors de la chambre (24).

16. Dispositif séparateur huile/eau selon la revendication 16, **caractérisé en ce que** le conduit collecteur d'évacuation (71) est susceptible d'être fermé par l'unité de commande (60) pendant que la chambre (24) est soumise à un air de commande (14).

17. Dispositif séparateur huile/eau selon l'une quelconque des revendications 1 à 17, **caractérisé en ce que** le filtre principal (30) est formé d'au moins une cartouche filtrante, susceptible d'être reliée temporairement avec le boîtier de tête (20).
